# EUROPEAN PATENT APPLICATION

(11) **EP 4 485 994 A1**
(43) Date of publication of application: **01.01.2025**
(21) Application number: 23758923.9
(22) Date of filing: 13.01.2023
(51) Int. Cl.: H04W 24/10

(54) **NETWORK ANALYSIS METHOD, NETWORK FUNCTION, AND STORAGE MEDIUM**

(30) Priority: 22.02.2022 CN 202210160337
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2023/072097
(87) International publication number: WO 2023/160298

(57) **Abstract**

A network analysis method, a network function, and a storage medium are provided. The method includes: obtaining, by a first network function, analysis information of the target network, wherein the analysis information of the target network includes at least one of the followings: analysis information of a first network and analysis information of a second network; the first network is a HPLMN, and the second network is a VPLMN; or, the first network is the VPLMN, and the second network is the HPLMN; performing, by the first network function, the management of a PDU session in a roaming scenario based on the analysis information of the target network.

## Description

### CROSS REFERENCE TO RELATED APPLICATIONS

The present application claims a priority to the Chinese patent application No. 202210160337.3 filed in China on February 22, 2022, a disclosure of which is incorporated herein by reference in its entirety.

### TECHNICAL FIELD

The present application relates to the field of communication technology, and in particular, to a network analysis method, a network function, and a storage medium.

### BACKGROUND

In a roaming scenario, a terminal can register with the Visited Public Land Mobile Network (VPLMN). Currently, management of a Protocol Data Unit (PDU) session in the roaming scenario is solely based on the subscription data of the terminal, which results in poor transmission performance of the PDU session.

### SUMMARY

The embodiments of the present application provide a network analysismethod, a network function and a storage medium to solve the problem of poor PDU session transmission performance caused by management based solely on terminal subscription data.

An embodiment of the present application provides a network analysis method, including:
obtaining, by a first network function, analysis information of a target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
performing, by the first network function based on the analysis information of the target network, management of a Protocol Data Unit (PDU) session in a roaming scenario.

Optionally, the performing the management of the PDU session in the roaming scenario includes at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

Optionally, establishing the PDU session of the local breakout mode when the analysis information of the second network meets a predetermined local breakout condition, and/or when the analysis information of the first network meets the predetermined local breakout condition;
and/or,
establishing the PDU session of the home routed mode when the analysis information of the second network meets a first predetermined home routed condition, and/or when the analysis information of the first network meets a second predetermined home routed condition.

Optionally, the network analysis method further including:
in the case of establishing the PDU session of the home routed mode for the terminal, selecting, by the first network function based on the analysis information of the first network, a network slice instance of the HPLMN and a session management function within the network slice instance.

Optionally, determining that at least one data flow in the PDU session uses the home routed mode, and the other data flow in the PDU session uses the local breakout mode, includes:
in the case that the analysis information of the first network meets a third predetermined home routed condition, and/or, the analysis information of the second network meets a fourth predetermined home routed condition, determining that the at least one data flow in the PDU session uses the home routed mode, and the other data flow in the PDU session uses the local breakout mode;
   or,
determining that the at least one data flow in the PDU session uses the local breakout mode, and the other data flow in the PDU session uses the home routed mode includes:
   in the case that the analysis information of the second network meets the first predetermined local breakout condition, determining that at least one data flow in the PDU session uses local breakout mode, and the other data flow in the PDU session uses the home routed mode.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the management of the PDU session in the roaming scenario includes:
updating the terminal with a network slice selection policy, wherein the network slice selection policy includes information of the first network slice and/or information of the second network slice, which is used to indicate that the terminal transmits data of a third application through the PDU session in the first network slice and/or the second network slice.

Optionally, the performing the management of the PDU session in the roaming scenario includes at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

Optionally, the analysis information includes at least one of the followings:
performance analysis information, service experience analysis information, load analysis information, congestion analysis information, resource analysis information, or state analysis information.

Optionally, the obtaining, by first network function, the analysis information of the target network, includes:
obtaining, by the first network function, the analysis information of the target network from a second network function, or obtaining, by the first network function through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the first network function through the third network function, the analysis information of the target network from the second network function, includes:
sending, by the first network function, a first request to the third network function, wherein the first request carries information of the first network and information of the second network, to cause the third network function to send a second request to the second network function based on the first request, wherein the second request carries the information of the second network for requesting the analysis information of the second network; and the third network function receives a first response sent by the second network function based on the second request, wherein the first response includes the analysis information of the second network;
receiving, by the first network function, a second response sent by the third network function based on the first response, wherein the second response carries the analysis information of the target network.

Optionally, the information of the first network includes information of the first network slice in the first network; the information of the second network includes information of the second network slice in the second network.

Optionally, the first network function includes one of the followings:
access and mobility management function, session management function, or policy control function.

An embodiment of the present application further provides a network analysis method, which is performed by a second network function or a third network function, including:
obtaining analysis information of a target network, wherein the analysis information of the target network including at least one of the followings: analysis information of a first network, or analysis information of a second network; the first network is a Home Public Land Mobile Network (HPLMN), and the second network is a Visited Public Land Mobile Network (VPLMN); or, the first network is a VPLMN, and the second network is an HPLMN;
sending the analysis information of the target network to a first network function, wherein the analysis information of the target network is used by the first network function to perform a management of a Protocol Data Unit (PDU) session in a roaming scenario.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the analysis information includes at least one of the followings:
performance analysis information, service experience analysis information, load analysis information, congestion analysis information, resource analysis information, or state analysis information.

Optionally, obtaining the analysis information of the target network includes:
obtaining, by the second network function, the analysis information of the target network, or obtaining, by the third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the third network function, the analysis information of the target network from the second network function, including:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response including the analysis information of the second network.

Optionally, the information of the first network includes information of a first network slice in the first network; the information of the second network includes information of a second network slice in the second network.

An embodiment of the present application further provides a network function, wherein the network function is a first network function, including: a memory, a transceiver, and a processor, wherein
the memory is configured to store a computer program; the transceiver is configured to receive and send data under the control of the processor; the processor is configured to read the computer program in the memory and perform the following operations:
obtaining analysis information of the target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
performing, based on the analysis information of the target network, management of a Protocol Data Unit (PDU) session in a roaming scenario.

Optionally, the performing the management of the PDU session in the roaming scenario includes at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

Optionally, establishing the PDU session of the local breakout mode when the analysis information of the second network meets a predetermined local breakout condition, and/or when the analysis information of the first network meets the predetermined local breakout condition;
and/or,
establishing the PDU session of the home routed mode when the analysis information of the second network meets a first predetermined home routed condition, and/or when the analysis information of the first network meets a second predetermined home routed condition.

Optionally, the processor is further configured to:
in the case of establishing the PDU session of the home routed mode for the terminal, selecting, based on the analysis information of the first network, a network slice instance of the HPLMN and a session management function within the network slice instance.

Optionally, determining that at least one data flow in the PDU session uses the home routed mode, and the other data flow in the PDU session uses the local breakout mode, includes:
in the case that the analysis information of the first network meets a third predetermined home routed condition, and/or, the analysis information of the second network meets a fourth predetermined home routed condition, determining that the at least one data flow in the PDU session uses the home routed mode, and the other data flow in the PDU session uses the local breakout mode;
   or,
determining that the at least one data flow in the PDU session uses the local breakout mode, and the other data flow in the PDU session uses the home routed mode includes:
   in the case that the analysis information of the second network meets the first predetermined local breakout condition, determining that at least one data flow in the PDU session uses local breakout mode, and the other data flow in the PDU session uses the home routed mode.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the performing the management of the PDU session in the roaming scenario includes at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

Optionally, the obtaining, the analysis information of the target network, includes:
obtaining, the analysis information of the target network from a second network function, or obtaining, through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

An embodiment of the present application further provides a network function, which is performed by a second network function or a third network function, including: a memory, a transceiver, and a processor, wherein
the memory is configured to store a computer program; the transceiver is configured to receive and send data under the control of the processor; the processor is configured to read the computer program in the memory and perform the following operations:
obtaining analysis information of a target network, wherein the analysis information of the target network including at least one of the followings: analysis information of a first network, or analysis information of a second network; the first network is a Home Public Land Mobile Network (HPLMN), and the second network is a Visited Public Land Mobile Network (VPLMN); or, the first network is a VPLMN, and the second network is an HPLMN;
sending the analysis information of the target network to a first network function, wherein the analysis information of the target network is used by the first network function to perform management of a Protocol Data Unit (PDU) session in a roaming scenario.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, obtaining the analysis information of the target network includes:
obtaining, by the second network function, the analysis information of the target network, or obtaining, by the third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the third network function, the analysis information of the target network from the second network function, including:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response including the analysis information of the second network.

An embodiment of the present application further provides a network function, wherein the network function is a first network function, including:
an obtaining unit, configured to obtain analysis information of the target network, the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
an execution unit, configured to perform management of a Protocol Data Unit (PDU) session in a roaming scenario based on the analysis information of the target network.

An embodiment of the present application further provides a network function, the network function being a second network function or a third network function, including:
an obtaining unit, configured to obtain analysis information of the target network, the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
a sending unit, configured to send the analysis information of the target network to the first network function, the analysis information of the target network is used by the first network function to perform management of a Protocol Data Unit (PDU) session in a roaming scenario.

An embodiment of the present application further provides a processor-readable storage medium. The processor-readable storage medium stores a computer program. The computer program is used to cause the processor to execute the network analysis method on the first network function side provided in the embodiment of the present application, or the computer program is used to cause the processor to execute the network analysis method on the second network function side or third network function side provided in the embodiment of the present application.

In the embodiments of the present application, the first network function obtains the analysis information of the target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN. The first network function performs management of a Protocol Data Unit (PDU) session in a roaming scenario based on the analysis information of the target network. As a result, it allows to perform the management of the PDU session in a roaming scenario based on the analysis information of at least one of the HPLMN or the VPLMN; thus, as compared to the management solely based on subscription data of the terminal, it improves the PDU session transmission performance in the embodiments of the present application.

### BRIEF DESCRIPTION OF THE DRAWINGS

Fig. 1 is a schematic diagram of the structure of the network architecture applicable to the implementation of the present application;
Fig. 2 is a schematic diagram of a route provided by the implementation of the present application;
Fig. 3 is a schematic diagram of another route provided by the implementation of the present application;
Fig. 4 is a flow chart of a network analysis method provided by an embodiment of the present application;
Fig. 5 is a flow chart of another network analysis method provided by an embodiment of the present application;
Fig. 6 is a schematic diagram of a network analysis method provided by an embodiment of the present application;
Fig. 7 is a schematic diagram of another network analysis method provided by an embodiment of the present application;
Fig. 8 is a schematic diagram of yet another network analysis method provided by an embodiment of the present application;
Fig. 9 is a schematic diagram of still yet another network analysis method provided by an embodiment of the present application;
Fig. 10 is a schematic diagram of still yet another network analysis method provided by an embodiment of the present application;
Fig. 11 is a structural diagram of a network function provided by an embodiment of the present application;
Fig. 12 is a structural diagram of another network function provided by an embodiment of the present application;
Fig. 13 is a structural diagram of yet another network function provided by an embodiment of the present application;
Fig. 14 is a structural diagram of still yet another network function provided by an embodiment of the present application.

### DETAILED DESCRIPTION

In order to make the technical problems, technical solutions and advantages to be solved by the present application clearer, a detailed description will be given below with reference to the accompanying drawings and specific embodiments.

In the embodiments of this application, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of this application, the term "plurality" refers to two or more than two, and other quantifiers are similar to it.

The technical solutions in the embodiments of the present application will be clearly and thoroughly described below with reference to the accompanying drawings in the embodiments of the present application. Obviously, the described embodiments are only some of the embodiments of the present application, not all of them. Based on the embodiments in this application, all other embodiments obtained by those of ordinary skill in the art without making creative efforts fall within the scope of this disclosure.

The embodiments of this application provide a network analysis method, a network function, and a storage medium to solve a problem of poor PDU session transmission performance caused by the management solely based on terminal subscription data.

The method and the apparatus are conceived based on a same inventive concept. Since principles of solving problems by the methods and the apparatuses are similar, their implementations may refer to each other, and repetitions will not be further elaborated herein.

The technical solutions provided by the embodiments of the present application can be applied to a variety of systems, especially 6G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, 6G System, etc. These various systems each include a terminal device and a network device. The system may further include a core network part, such as the evolved packet system (EPS), 5G System (5GS), etc.

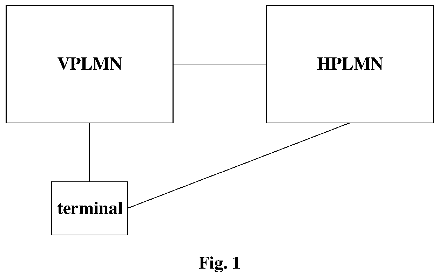

Refer to Fig. 1, which is a schematic diagram of a network architecture applicable to the present application. As shown in Fig. 1, it includes a terminal, a VPLMN, and an HPLMN, wherein:

The terminal involved in the embodiments of the present application may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network. For example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present application.

The VPLMN involved in the embodiments of the present application may include: User Plane Function (UPF), Session Management Function (SMF), Access and Mobility Management Function (AMF), Network Slice Admission Control Function (NSACF), Network Slice Selection Function (NSSF), Network Exposure Function (NEF), Network Repository Function (NRF), Policy Control Function (PCF), Visited Security Edge Protection Proxy (vSEPP), and may also include: Network Data Analytic Function (NWDAF), Data Collection Coordination Function (DCCF), Data Collection Function (DCF), Analytics Data Repository Function (ADRF).

The HPLMN may include: Home Security Edge Protection Proxy (hSEPP), Unified Data Management (UDM), NRF, NEF, NSSF, NSACF, SMF, Authentication Server Function (AUSF), PCF, Application Function (AF), Network Slice-Specific Authentication and Authorization Function (NSSAAF), UPF, and may also include: NWDAF, DCCF, DCF, ADRF.

In the embodiments of the present application, the NWDAF can provide network data analysis services to other network function entities by interacting with the other network function entities based on Artificial Intelligence (AI) algorithms. The main functions of the NWDAF may include:
1) receiving an analysis request from a network function entity (consumer NF), and based on the request, collecting network data from a data source network function entity (data provider) as the input data required for the network analysis;
2) performing network analysis by using the collected data to obtain statistical and predictive information about the state or performance of the network or the terminal, i.e., analysis information;
3) providing the analysis information to other network function entities.

In the embodiments of the present application, in a roaming scenario, the PDU session of the terminal can include two types of routing modes: a Home Routed (HR) and a Local Breakout (LBO).

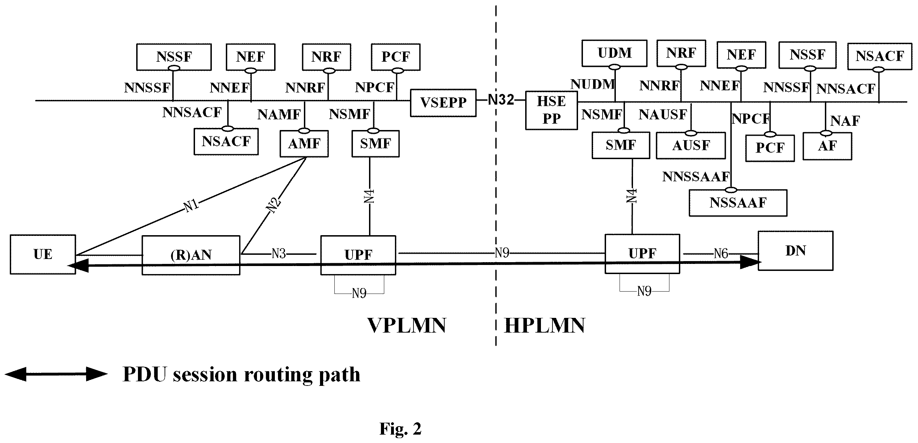

For Home Routed, a PDU session data of the terminal can be routed under the control of a V-SMF (i.e., SMF of VPLMN) and an H-SMF (i.e., SMF of HPLMN), via a V-UPF (i.e., UPF of VPLMN) to an H-UPF (i.e., UPF of HPLMN), and then routed to the Data Network (DN). In other words, the PDU session of the terminal needs to be established on network slices of both the VPLMN and the HPLMN. The network slice of the VPLMN can be identified by Single Network Slice Selection Assistance Information (S-NSSAI) 1, and the network slice of the HPLMN can be identified by S-NSSAI 2, as illustrated in Fig. 2.

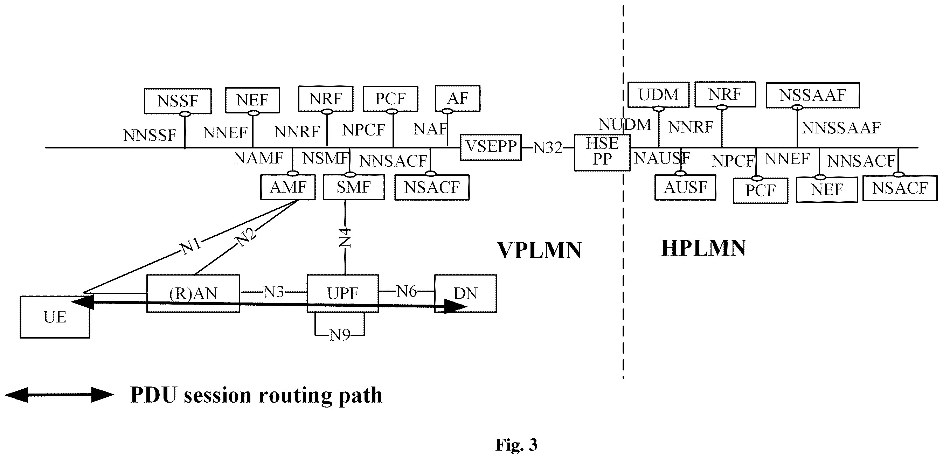

For Local Breakout, the PDU session data of the terminal is routed to the data network under the control of the V-SMF via the V-UPF, as illustrated in Fig. 3.

In addition, in the embodiments of the present application, when a roaming terminal registers to a visited network VPLMN, the VPLMN can select a network slice information of the VPLMN that is allowed for the terminal to use, and a mapped network slice information of the HPLMN, which are respectively indicated by Allowed NSSAI (Allowed Network Slice Selection Assistance Information) and Mapping of Allowed NSSAI. Both Allowed NSSAI and Mapping of Allowed NSSAI contain one or more S-NSSAI (Single-NSSAI), each S-NSSAI identifies a specific network slice, such as a network slice for an enhanced Mobile Broadband (eMBB) service or a network slice for an Ultra-Reliable Low Latency Communications (URLLC) services, etc. The roaming terminal can then choose a S-NSSAI from the Allowed NSSAI and Mapping of Allowed NSSAI, for example, VPLMN S-NSSAI 1 and the mapped HPLMN S-NSSAI 2, to request the establishment of a PDU session in the network (VPLMN).

In the embodiments of the present application, the network side and the terminal may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, pre-coded transmission, beam forming transmission, or the like.

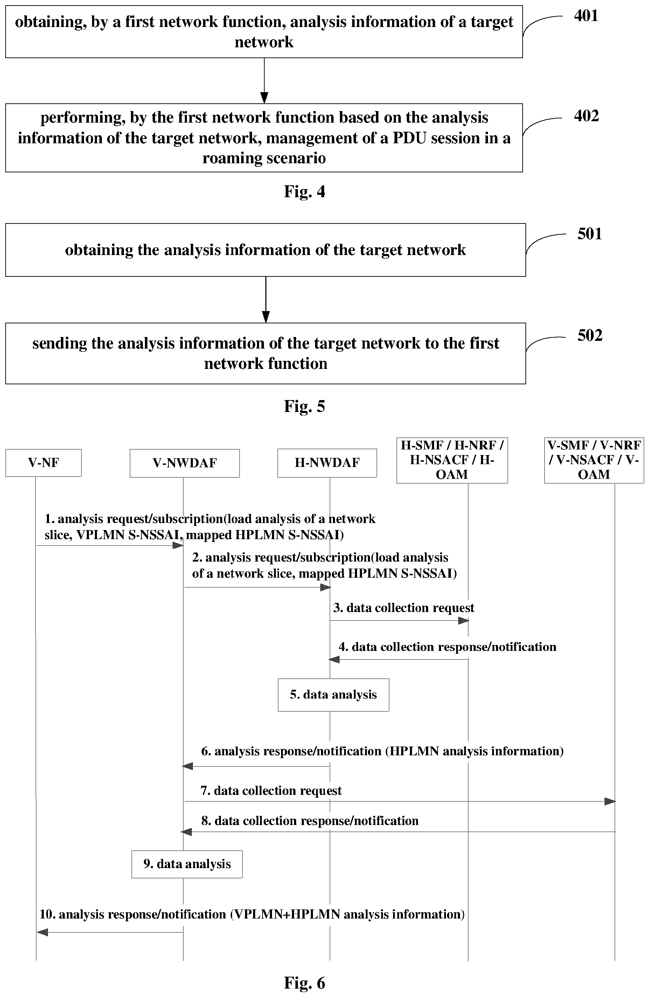

Refer to Fig. 4, which is a flowchart of a network analysis method provided by an embodiment of the present application. As shown in Fig. 4, the network analysis method includes the following steps:
step 401: obtaining, by a first network function, analysis information of a target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
step 402: performing, by the first network function based on the analysis information of the target network, management of a Protocol Data Unit (PDU) session in a roaming scenario.

The aforementioned first network function may belong to the first network, or the aforementioned first network function belongs to the second network.

Optionally, the first network function includes one of the followings:
access and mobility management function, session management function, or policy control function.

For example, the first network function may be a Visited Network Function (V-NF), such as V-AMF, V-PCF, or AMF. For example, the first network function may be a Home Network Function (H-NF), such as H-AMF, H-PCF, or AMF.

The analysis information obtained by the target network can be the analysis information of the target network obtained by the first network function through the second network function. The target network analysis information may include network analysis information obtained through the analysis of the second network function, and may also include network analysis information that is obtained through the analysis of another network function and obtained by the second network function. For example, in the case that the first network function belongs to the VPLMN, the analysis information of the target network can be obtained through the V-NWDA or the V-DCCF; in the case that the first network function belongs to the HPLMN, the analysis information of the target network can be obtained through the H-NWDA or the H-DCCF.

In the embodiments of the present application, the analysis information of the first network can represent the network conditions of the first network, such as congestion, load, performance, etc. The analysis information of the second network can represent the network conditions of the second network, such as congestion, load, performance, etc.

The above-mentioned first network function performs the management of the PDU session in the roaming scenario based on the analysis information of the target network, including selectively transmitting, session establishment, routing, and other management operations for the PDU session in at least one of the first network and the second network under the roaming scenario based on the analysis information of the target network.

In the embodiments of the present application, the above steps allow the first network function to perform the management of the PDU (Packet Data Unit) session in the roaming scenario based on the analysis information of the target network, thus improving the PDU session transmission performance compared to the management solely based on subscription data of the terminal. For instance, in cases of congestion, high load, or poor performance in a visited network, a data transmission is based on the PDU session of a home routed mode under the roaming scenario; whereas in cases of congestion, high load, or poor performance in a home network, a data transmission is performed based on the PDU session of a local breakout mode under the roaming scenario.

As an optional implementation, performing the management of the PDU session under the roaming scenario includes at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

The aforementioned establishment of the PDU session of a local breakout mode can be, when the network condition of the VPLMN is relatively good, the PDU session of the local breakout mode is established. For example, when the VPLMN load or the percentage of used resources is below a preset threshold value, a PDU session of a local breakout mode is established. Alternatively, a PDU session of a local breakout mode is established when the network condition of the HPLMN is relatively poor.

Optionally, establishing the PDU session of the local breakout mode when the analysis information of the second network meets a predetermined local breakout condition, and/or when the analysis information of the first network meets the predetermined local breakout condition.

The predetermined local breakout condition corresponding to the analysis information of the second network can be the same as or different from the predetermined local breakout condition corresponding to the analysis information of the first network. For example, a threshold corresponding to the first network and a threshold corresponding to the second network can be the same or different.

The aforementioned predetermined local breakout condition can be protocol-defined or configured by the network side.

In this implementation, a PDU session of a local breakout mode can be established under a condition that a local breakout condition is met, to improve the transmission performance of the PDU session.

The aforementioned establishment of the PDU session of a home routed mode can be, when the network condition of VPLMN is relatively poor, the PDU session of the home routed mode is established. For example, when the VPLMN load or the percentage of used resources is exceeds a preset threshold value, a PDU session of a home routed mode is established. Alternatively, a PDU session of a home routed mode is established when the network condition of the HPLMN is relatively good.

Optionally, a PDU session of the home routed mode is established when the analysis information of the second network meets a first predetermined home routed condition, and/or when the analysis information of the first network meets a second predetermined home routed condition.

The first predetermined home routed condition and the second predetermined home routed condition can be the same or different.

The first predetermined home routed condition and the second predetermined home routed condition can be protocol-defined or configured by the network side.

In this implementation, a PDU session of a home routed mode can be established under a condition that a home routed condition is met, to improve the transmission performance of the PDU session.

The selection of the session management function in the HPLMN for the PDU session of the home routed mode can be based on at least one of the analysis information of the first network and the analysis information of the second network. For instance, the SMF in the HPLMN is selected for its better performance (e.g., probability or percentage of successful PDU session establishment higher than a preset threshold value) or lower load (e.g., load below a preset threshold value), to further improve the transmission performance of the PDU session.

Optionally, the network analysis method further including:
in the case of establishing the PDU session of the home routed mode for the terminal, selecting, by the first network function based on the analysis information of the first network, a network slice instance of the HPLMN and a session management function within the network slice instance.

In this implementation, in the case of establishing a PDU session of a home routed mode in a roaming scenario, it is possible to further select, based on the analysis information of the first network, a network slice instance of the HPLMN and a session management function within the network slice instance. This ensures that the network slice instance and session management function serving the terminal are better matched with the current network, thereby improving the transmission performance of the PDU session.

The determination that at least one data flow in the PDU session uses the home routed mode, and other data flows in the PDU session use the local breakout mode may include determining, based on at least one of the analysis information of the first network and the analysis information of the second network, that some data flows in the PDU session use the home routed mode while others use the local breakout mode. For example, when the HPLMN condition is favorable, more data flows may use a home routed mode; when the VPLMN condition is favorable, more data flows may use a local breakout mode. As a result, it may flexibly determine the routing of the PDU session based on the actual network condition, so as to further improve the transmission performance of the PDU session.

Optionally, determining that at least one data flow in the PDU session uses the home routed mode, and other data flows in the PDU session use the local breakout mode, includes:
in the case that the analysis information of the first network meets a third predetermined home routed condition, and/or, the analysis information of the second network meets a fourth predetermined home routed condition, determining that the at least one data flow in the PDU session uses the home routed mode, and other data flows in the PDU session use the local breakout mode.

The third predetermined home routed condition and the fourth predetermined home routed condition can be the same or different. In addition, the third predetermined home routed condition and the fourth predetermined home routed condition may be defined by a protocol or configured by the network side.

In this implementation, it is possible to determine that at least one data flow in the PDU session uses the home routed mode, and other data flows in the PDU session use the local breakout mode while the home routed condition is met, so as to further improve the transmission performance of the PDU session.

The determination that at least one data flow in the PDU session uses the local breakout mode, and other data flows in the PDU session use the home routed mode may include determining, based on at least one of the analysis information of the first network and the analysis information of the second network, that some data flows in the PDU session use the local breakout mode while other data flows in the PDU session use the home routed mode. For example, when the VPLMN condition is favorable, more data flows may use a local breakout mode; when the HPLMN condition is favorable, more data flows may use a home routed mode. As a result, it may flexibly determine the routing of the PDU session based on the actual network condition, so as to further improve the transmission performance of the PDU session.

Optionally, determining that the at least one data flow in the PDU session uses the local breakout mode, and other data flows in the PDU session use the home routed mode includes:
in the case that the analysis information of the second network meets the first predetermined local breakout condition, determining that at least one data flow in the PDU session uses local breakout mode, and other data flows in the PDU session use the home routed mode.

The first predetermined local breakout condition and the second predetermined local breakout condition can be the same or different. In addition, the first predetermined local breakout condition and the second predetermined local breakout condition may be defined by a protocol or configured by the network side.

In this implementation, it is possible to determine that at least one data flow in the PDU session uses the local breakout mode, and other data flows in the PDU session use the home routed mode under a condition that a local breakout condition is met, so as to further improve the transmission performance of the PDU session.

As an optional implementation, the analysis information of the first network includes the analysis information of a first network slice in the first network;
the analysis information of the second network includes analysis information of a second network slice in the second network;
wherein there is a mapping relationship between the first network slice and the second network slice.

The first network slice can be one or more network slices, and a network slice can include one or more slice instances; the second network slice can be one or more network slices, and a network slice can include one or more slice instances.

In this implementation, the first network slice and the second network slice can be network slices indicated by the first network function for analysis. However, the present application is not limited to this. Alternatively, the first and the second network slices may be determined by the second network function or a third network function itself.

The mapping relationship between the first network slice and the second network slice may be the mapping relationship between the network slice of the VPLMN and the mapped network slice of the HPLMN.

In this implementation, since the analysis information of at least one of the first network slice and the second network slice is obtained, the management of the PDU session may be performed based on the granularity of the network slice or the network slice instance, thereby further improving the transmission performance of the PDU session. For example, a better-performing or more suitable network slice or network slice instance may be selected to provide the service for the PDU session.

Optionally, the management of the PDU session under the roaming scenario includes:
updating the terminal with a network slice selection policy, wherein the network slice selection policy includes information of the first network slice and/or information of the second network slice, which is used to instruct the terminal to transmit data of a third application through the PDU session in the first network slice and/or the second network slice.

The above third application may be one or more applications, for example, a specific application.

In this implementation, since the terminal updates the network slice selection policy, it is possible for the terminal to update the network slice used for the data transmission of the PDU session, thereby improving the transmission performance of the PDU session.

Optionally, the performing the management of the PDU session in the roaming scenario includes at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

The aforementioned routing selection policy may be a User equipment Route Selection Policy (URSP).

The first application mentioned above may be one or more applications, such as a specific application. The second application may be one or more applications, for example, a specific application. In some implementations, the first application and second application may be the same or different.

In this implementation, when the second network slice does not meet data transmission requirement of the first application of the terminal, the above-mentioned first routing selection policy can indicate the data of the first application to be transmitted through the PDU session in the third network slice within the second network, so as to improve the transmission performance of the PDU session. In addition, when the first network slice does not meet data transmission requirement of the second application of the terminal, the above-mentioned second routing selection policy can indicate the data of the second application to be transmitted through the PDU session in the fourth network slice within the second network, so as to improve the transmission performance of the PDU session.

For example, if the load (or resource usage, performance, service experience, etc.) of the VPLMN slice identified by S-NSSAI1 no longer meets a Quality of Service (QoS) requirement for the data transmission of the first application, such as high load (or resource usage) or low performance, low service experience, etc., thus failing to meet a delay requirement or a reliability requirement of the data transmission of the first application, then the H-PCF can modify the URSP to set the data of the first application on the terminal to be transmitted through the PDU session established in the network slice identified by VPLMN S-NSSAI3, the network slice identified by VPLMN S-NSSAI3 meets the QoS requirement of the first application.

For another example, if the load (or resource usage, performance, service experience, etc.) of the HPLMN slice mapped by VPLMN S-NSSAI1 and identified by HPLMN S-NSSAI3 no longer meets the QoS requirement of the data transmission of the second application, and the data of the second application on the terminal is transmitted through the PDU session of a home routed mode (i.e., also through the HPLMN slice identified by HPLMN S-NSSAI3), then the H-PCF can modify the URSP to set the data of the second application on the terminal to be transmitted through the PDU session in the network slice identified by VPLMN S-NSSAI4. The VPLMN network slice identified by the VPLMN S-NSSAI4 and the HPLMN network slice mapped by the VPLMN network slice and identified by the HPLMN S-NSSAI5 meet the QoS requirement of the second application.

As an optional implementation, the analysis information includes at least one of the followings:
performance analysis information, service experience analysis information, load analysis information, congestion analysis information, resource analysis information, or state analysis information.

The performance analysis information may include the number, means, variances of established PDU sessions, as well as transmission performance, transmission accuracy, transmission reliability, etc.

The service experience analysis information may include transmission experience analysis information of the terminal service in the network.

The load analysis information may include load level or load size.

The congestion analysis information may include congestion level or congestion size.

The resource analysis information may include resource usage, such as memory usage or CPU usage.

The status analysis information may include operation status or business status, etc.

Furthermore, the analysis information may be obtained from analyzing at a granularity of a network, a network slice, a network slice instance, or a network function.

In this implementation, the above at least one analysis information can more accurately reflect status information of the network, thereby aligning the PDU transmission management more closely with the network to maximize the transmission performance of the PDU session.

As an optional implementation, the first network function obtains the analysis information of the target network, including:
obtaining, by the first network function, the analysis information of the target network from a second network function, or obtaining, by the first network function through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

The obtaining, by the first network function, the analysis information of the target network from a second network function may include that the first network actively requests or passively requests the second network for the analysis information of the target network. For example, the first network function sends a request message to the second network function and obtains the analysis information of the target network from the second network function through the request message.

In addition, the obtaining the analysis information of the target network from the second network function may be obtaining network analysis information of a specific network requested by the first network function. For example, the request information that the first network function sends to the second network function may include at least one of the followings:
analysis identifier, analysis filtering information, network function type, load level threshold value, or identification information;
wherein the analysis identifier may indicate the type of analysis or identify specific analysis information; the analysis filtering information may indicate slice information including the VPLMN and mapped slice information of the HPLMN, such as VPLMN S-NSSAI and mapped HPLMN S-NSSAI. The analysis filtering information may also include the slice instance identifier (Network Slice ID, NSI ID) of the VPLMN.

The network function type (the list of NF types) can indicate the functional entity types that are subjected to the load or performance analysis, such as the load or performance analysis may be performed on the SMF and the UPF. It may also specify the analysis of a specific network function (for example, the H-SMF) in a particular network (i.e., home network, visited network), to indicate the load or performance analysis for the SMF in the HPLMN.

The load level threshold value can indicate that when the load level of a network slice in the VPLMN or HPLMN meets the threshold condition (e.g., above or below the threshold), (specific) analysis information needs to be sent. It may further specify a specific threshold value for a particular network (i.e., home network, visited network), for example, HPLMN Load Level Threshold value = Level-2.

The identification information can indicate the home network identity (HPLMN ID) or indicate a user equipment identity (UE ID) of a terminal, such as a Subscription Permanent Identifier (SUPI), and the SUPI includes the HPLMN ID of the home network of the terminal.

The third network function may be a second network data analysis function, a second network data collection function, or a third network data storage function. The first network function obtaining the analysis information of the target network from the second network function through the third network function may include that the first network function sends a request to the third network function to obtain the analysis information of the target network from the second network function.

Optionally, the obtaining, by the first network function through the third network function, the analysis information of the target network from the second network function, includes:
sending, by the first network function, a first request to the third network function, wherein the first request carries information of the first network and information of the second network, to cause the third network function to send a second request to the second network function based on the first request, wherein the second request carries the information of the second network for requesting the analysis information of the second network; and the third network function receives a first response sent by the second network function based on the second request, wherein the first response includes the analysis information of the second network;
receiving, by the first network function, a second response sent by the third network function based on the first response, wherein the second response carries the analysis information of the target network.

Optionally, the information of the first network includes information of the first network slice in the first network; the information of the second network includes information of the second network slice in the second network. For example, the information of the first network may be the identification information of the first network slice in the first network, and the information of the second network may be the identification information of the second network slice in the second network.

In this implementation, it is possible to obtain the analysis information of target network from a third network function.

In the embodiments of the present application, the first network function obtains the analysis information of the target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN. The first network function performs management of a Protocol Data Unit (PDU) session in a roaming scenario based on the analysis information of the target network. This allows for performing the management of the PDU session in a roaming scenario based on the analysis information of at least one of the HPLMN or the VPLMN, thus improving the PDU session transmission performance by the embodiments of the present application compared to the management solely based on subscription data of the terminal.

Refer to Fig. 5, which is another flowchart of a network analysis method provided by an embodiment of the present application. The network analysis method is executed by either a second network function or a third network function. As shown in Fig. 5, the method includes the following steps:
step 501: obtaining analysis information of a target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
step 502: sending the analysis information of the target network to a first network function, wherein the analysis information of the target network is used by the first network function to perform management of a Protocol Data Unit (PDU) session in a roaming scenario.

The second network function can belong to either the first network or the second network, for example, the second network function can include:
V-NWDAF, H-NWDAF, V-DCF, H-DCF, V-DCCF, H-DCCF, V-network data storage function, H-network data storage function.

The third network function may be a network function that belongs to a different or a same network as the second network function, and the second network function may further include:
V-NWDAF, H-NWDAF, V-DCF, H-DCF, V-DCCF, H-DCCF, V-network data storage function, H-network data storage function.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the analysis information includes at least one of the followings:
performance analysis information, service experience analysis information, load analysis information, congestion analysis information, resource analysis information, or state analysis information.

Optionally, the obtaining the analysis information of the target network, includes:
the second network function obtaining the analysis information of the target network, or, the third network function obtaining the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the third network function, the analysis information of the target network from the second network function, including:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response including the analysis information of the second network.

Optionally, the information of the first network includes information of a first network slice in the first network; the information of the second network includes information of a second network slice in the second network.

It should be noted that the present embodiment corresponds to the implementation of the second network function or third network function as shown in Fig. 4. The specific implementation of the present embodiment can refer to the relevant description of the embodiment shown in Fig. 4. To avoid redundancy, the present embodiment will not be described further, and it can achieve the same beneficial effect.

The methods provided by the present application are illustrated below through multiple embodiments.

### Embodiment 1

This embodiment mainly describes how the V-NF obtains network analysis information through V-NWDAF, as shown in Fig. 6, including the following steps.

Step 1: The network function entity V-NF of the visited network (e.g., AMF, V-SMF, V-PCF) sends an analysis request of a network slice to the V-NWDAF. This request asks the V-NWDAF to provide the analysis information of specific slices of the VPLMN and the HPLMN or provide the analysis information of a specific slice of the HPLMN to the V-NF. The analysis request may carry the following information:
a. analysis identifier (used to indicate the type of analysis or identify specific analysis information) as analysis information of network slice load level, i.e., Analytics ID = "Load level information". It should be noted that the requested analysis information of the network slice in this embodiment may also include performance analysis information of the network slice, service experience analysis information of the network slice, etc. Here, the analysis information of the network slice load level is taken as an example;
b. analytics filter information, including the slice information of the VPLMN and the mapped slice information of HPLMN, i.e., VPLMN S-NSSAI and mapped HPLMN S-NSSAI. It may also include the slice instance identifier (NSI ID: Network Slice ID) of the VPLMN.

The analysis request may also carry the following information:
c. network function type (list of NF types), used to indicate the functional entity types that are subjected to the load or performance analysis, etc., such as the SMF and the UPF. It may further indicate the analysis of a specific network function type in a particular network (i.e., home network or visited network), such as H-SMF, indicating the load or performance analysis for the SMF in the HPLMN;
d. load level threshold value, used to indicate that when the load level of the network slice in the VPLMN or HPLMN meets the threshold condition (e.g., above or below the threshold), (specific) analysis information needs to be sent. It may further indicate a specific threshold value for a particular network (i.e., home network, visited network), for example, HPLMN Load Level Threshold value = Level-2;
e. home network identity HPLMN ID or a user equipment identity (UE ID), such as a Subscription Permanent Identifier (SUPI), which includes the HPLMN ID of the home network of the UE.

In addition, the analysis request information related to the home network may further be carried separately in the HPLMN analytics request container. For example, the HPLMN analytics request container = { Analytics ID = "Load level information"; Analytics Filter Information = mapped HPLMN S-NSSAI; list of NF types = SMF; Load Level Threshold value = Level-5 }.

Specifically, the analysis request includes a request for a single analysis information or a request for a subscription to multiple analysis information. For example, it may request the NWDAF to report analysis information periodically or report analysis information when the analysis information is updated.

Step 2: Based on the analysis request received in Step 1, the V-NWDAF sends an analysis request of the network slice to the H-NWDAF, requesting the H-NWDAF to provide analysis information of a specific slice of the HPLMN to the V-NWDAF. The analysis request may carry the following information:
a. analytics ID, which is same as that in step 1;
b. analytics filter information, including the mapped slice information of the HPLMN, i.e., mapped HPLMN S-NSSAI.

If the analysis request in Step 1 also carries information such as network function type and load level threshold, etc., correspondingly, the analysis request of the network slice sent by V-NWDAF to H-NWDAF carries the following information:
c. network function type (list of NF types), which is same as that in step 1. If the analysis is designated for a specific network function type of the home network, it only includes the network function type of the home network, for example, the H-SMF or SMF (since the request is sent to the H-NWDAF, it is the SMF in the HPLMN by default);
d. load level threshold value, which is same as that in step 1. If a specific threshold is designated for the home network, it only includes the load level threshold value of the home network, for example, HPLMN Load Level Threshold value = Level-5, or Load Level Threshold value = Level-5 (since the request is sent to the H-NWDAF, it is the load level threshold of the HPLMN by default).

If the analysis request information related to the home network in step 1 is carried separately in the HPLMN analytics request container, then the information from the HPLMN analytics request container is carried by the V-NWDAF directly in the network slice analysis request sent to the H-NWDAF.

Step 3: sending, by the H-NWDAF based on the analysis request received in step 2, a data collection request to the network function entity H-NF (e.g., H-SMF, H-NRF, H-NSACF) and/or the OAM in the home network, requesting the relevant data of the mapped HPLMN slice to obtain the analysis information of the network slice. If the mapped HPLMN slice includes multiple Network Slice Instances (NSIs), such as the NSI-1 and the NSI-2, the H-NWDAF requests relevant data of each slice instance.

Specifically, the H-NWDAF can determine the slice that needs analysis based on the mapped HPLMN S-NSSAI. If the mapped HPLMN slice includes multiple slice instances, the H-NWDAF determines each slice instance. Furthermore, the H-NWDAF may perform at least one of the following actions:
1). requesting a PDU session establishment or release report from the H-SMF in the mapped HPLMN slice (or each slice instance);
2). requesting load information of the H-SMF in the mapped HPLMN slice (or each slice instance) from the H-NRF, based on that the network function type is the SMF or the H-SMF;
3). requesting the number of currently established PDU sessions in the mapped HPLMN slice (or each slice instance) from the H-NSACF;
4). requesting the average number of PDU sessions established within a certain period in the mapped HPLMN slice (or each slice instance) from the OAM; requesting load information of the H-SMF in the mapped HPLMN slice (or each slice instance) from the OAM based on that the network function type is the SMF or the H-SMF.

Step 4: sending, by the H-NF (such as H-SMF, H-NRF, H-NSACF) and/or the OAM based on the data collection request received in step 3, a data collection response or notification to the H-NWDAF, which includes the requested data information by the H-NWDAF.

Step 5: performing, by the H-NWDAF based on the data received from the H-NF and/or the OAM, data analysis to obtain analysis information about the mapped HPLMN slice. If the mapped HPLMN slice includes multiple slice instances, the analysis information includes analysis information of each slice instance. The analysis information includes statistical data or predicted data regarding the state, performance, etc., of a communication system (including its functional entity like a network or a terminal functional entity).

Specifically, for the mapped HPLMN slice or each slice instance, the analysis information may include at least one of the followings:
the number (mean, variance) of established PDU sessions, load level, resource (e.g., memory, CPU) usage, H-SMF load, resources usage, performance, etc.

If the analysis request in step 2 includes load level threshold value, then:
1). the H-NWDAF reports the analysis information only when the load level of the mapped HPLMN slice or slice instance meets the threshold condition;
   or,
2). when the load level of the mapped HPLMN slice or slice instance meets the threshold condition, the analysis information further includes: the resource usage variation information of the mapped HPLMN slice or slice instance and the load level that meets the threshold condition.

Step 6: sending, by the H-NWDAF, the analysis information of the mapped HPLMN slice to V-NWDAF.

Step 7: sending, by the V-NWDAF based on the analysis request received in step 1, a data collection request to the network function entity in the visited network V-NF (such as V-SMF, V-NRF, V-NSACF) and/or the OAM, requesting relevant data of the VPLMN slice to obtain the analysis information of the VPLMN network slice. The specific method thereof is same as that in step 3, wherein the H-NWDAF is replaced by the V-NWDAF, the mapped HPLMN S-NSSAI is replaced by the VPLMN S-NSSAI, and the HPLMN is replaced by the VPLMN, and the H-SMF, the H-NRF, the H-NSACF are replaced by the V-SMF, the V-NRF, the V-NSACF, respectively.

Step 8: sending, by the V-NF (such as V-SMF, V-NRF, V-NSACF) and/or the OAM based on the data collection request received in step 7, a data collection response or notification to the V-NWDAF, which includes the requested data information by V-NWDAF.

Step 9: performing, by the V-NWDAF based on the data received from the V-NF and/or the OAM, data analysis, to obtain the analysis information about the VPLMN slice. If the VPLMN slice includes multiple slice instances, the analysis information includes the analysis information of each of slice instances. The detailed description of the analysis information is same as that in step 5, wherein the H-NWDAF is replaced by the V-NWDAF, the HPLMN is replaced by the VPLMN, and the H-SMF is replaced by the V-SMF. The analysis information of the VPLMN slice may further include the load level of the V-UPF.

Step 10: sending, by the V-NWDAF, the analysis information of both the VPLMN slice and the HPLMN slice to the V-NF, which includes the analysis information of the mapped HPLMN slice provided by the H-NWDAF and the analysis information of the VPLMN slice obtained by the V-NWDAF. Alternatively, the V-NWDAF sends the analysis information of the HPLMN slice to the V-NF, i.e., the analysis information of the mapped HPLMN slice provided by H-NWDAF. In this case, steps 7-9 as mentioned above may be skipped.

It should be noted that steps 3-5 and steps 7-9 may be executed in parallel in this embodiment.

In addition, the process of this embodiment is also applicable to the H-NF obtaining the analysis information of the VPLMN, as long as interchanging "H-" and "V-" in the process. That is, when "H-" and "V-" are interchanged in the process of this embodiment, it will be the process of the H-NF obtaining the analysis information of the network.

### Embodiment 2

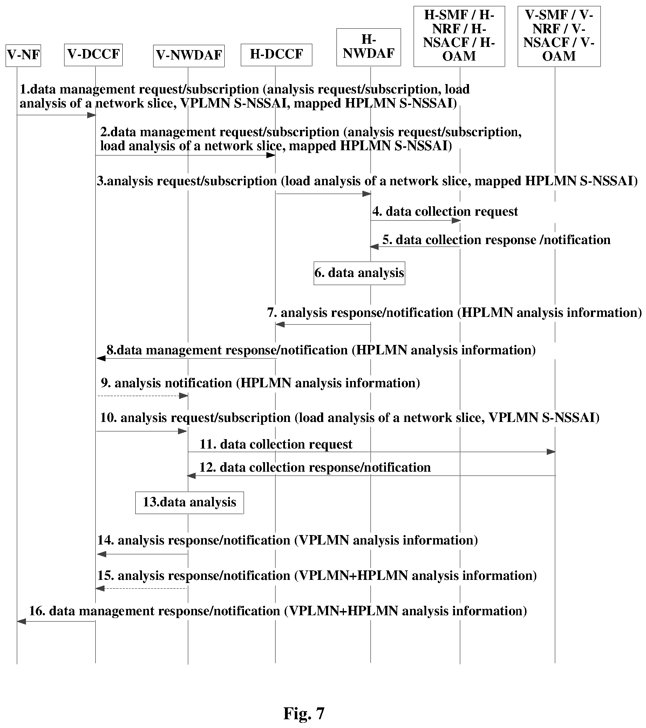

This embodiment mainly describes how the V-NF obtains the network analysis information from the NWDAF through the V-DCCF, as shown in Fig. 7, it includes the following steps.

Step 1: sending, by a network function entity V-NF of a visited network, (e.g., AMF, V-SMF, V-PCF), an analysis data management request of a network slice to V-DCCF, requesting to obtain analysis information of specific slices of both a VPLMN and an HPLMN through a V-DCCF, or to obtain a specific slice of the HPLMN.

The analysis data management request may carry the following information.
A. service operation, used to indicate the request for analysis information, i.e., Nnwdaf_AnalyticsSubscription_Subscribe.
B. parameter carried by the service operation in A, i.e., the analytics request parameter (analytics specification), which may include the following information:
   a. analysis identifier (used to indicate the type of analysis or identify specific analysis information), which is analysis information of a network slice load level, specifically: Analytics ID = "Load level information";
   b. analytics filter information, including the slice information of the VPLMN and the mapped slice information of the HPLMN, i.e., the VPLMN S-NSSAI and the mapped HPLMN S-NSSAI. It may also include the slice instance identifier (Network Slice ID, NSI ID) of the VPLMN.

The analysis request parameter may also carry the following information:
c. network function type (list of NF types), used to indicate the functional entity types that are subjected to the load or performance analysis, etc., such as the SMF and the UPF. It may further specify the analysis of a specific network function type in a particular network (i.e., home network or visited network), such as the H-SMF, indicating the load or performance analysis for the SMF in the HPLMN;
d. load level threshold value, used to indicate that when the load level of a network slice in the VPLMN or HPLMN meets the threshold condition (e.g., above or below the threshold), specific analysis information needs to be sent. It may further specify a specific threshold for a particular network (i.e., home network, visited network), for example, HPLMN Load Level Threshold value = Level-2;
e. home network identity HPLMN ID or user equipment identity (UE ID), such as a Subscription Permanent Identifier (SUPI), which includes the HPLMN ID of the home network of the UE.

The analysis request information related to the home network may further be carried separately in the HPLMN analytics request container. For example: HPLMN analytics request container = { Analytics ID = "Load level information"; Analytics Filter Information = mapped HPLMN S-NSSAI; list of NF types = SMF; Load Level Threshold value = Level-5 }.

Step 2: sending, by the V-DCCF based on the analysis data management request received in step 1, an analysis data management request of the network slice to the H-DCCF, requesting to obtain analysis information of a specific slice of the HPLMN through the H-DCCF.

Specifically, the analysis data management request carries the following information.
A. service operation, used to indicate the request for analysis information, i.e., Nnwdaf_AnalyticsSubscription_Subscribe.
B. parameter carried by service operation in A, i.e., the analytics specification, which may include the following information:
   a. analytics ID, which is same as that in step 1;
   b. analytics filter information, including the mapped HPLMN slice information, i.e., the mapped HPLMN S-NSSAI.

If the analysis request parameter in step 1 also carries information such as network function type and load level threshold, etc., correspondingly, the analysis request parameter sent by the V-DCCF to the H-DCCF carries the following information:
c. network function type (list of NF types), which is same as that in step 1. If the analysis is designated for a specific network function type of the home network, it only includes the network function type of the home network, for example, the H-SMF or the SMF (since the request is sent to the H-NWDAF, it is the SMF in the HPLMN by default);
d. load level threshold value, which is same as that in step. If a specific threshold is designated for the home network, it only includes the load level threshold value of the home network, for example, HPLMN Load Level Threshold value = Level-5, or Load Level Threshold value = Level-5 (since the request is sent to the H-NWDAF, it is the load level threshold of the HPLMN by default).

If the analysis request information related to the home network in step 1 is carried separately in the HPLMN analytics request container, then the information from the HPLMN analytics request container is carried by the V-DCCF directly in the analysis request parameter sent to the H-DCCF.

Step 3: sending, by the H-DCCF, an analysis request of the network slice to H-NWDAF, requesting the H-NWDAF to provide analysis information of a specific slice of the HPLMN. Specifically, the information carried in the analysis request is the same as that carried in the analysis request parameter in step 2.

Step 4-6: same as steps 3-5 in Embodiment 1.

Step 7: sending, by the H-NWDAF, the analysis information of the mapped HPLMN slice to the H-DCCF.

Step 8: sending, by the H-DCCF, the analysis information of the mapped HPLMN slice to the V-DCCF.

Step 9: optionally, sending, by the V-DCCF, an analysis information notification to the V-NWDAF, which carries the analysis information of the mapped HPLMN slice. Specifically, the V-DCCF can send the analysis information notification to the V-NWDAF, which based on local configuration, or when the V-NWDAF has subscribed to the analysis information of the HPLMN from the V-DCCF.

Step 10: sending, by the V-DCCF, an analysis request of the network slice to the V-NWDAF, requesting the V-NWDAF to provide analysis information of a specific slice of the VPLMN. Specifically, the analysis request carries information related to the VPLMN in the analysis request parameter in step 1, and the information may include the following:
a. analysis identifier (used to indicate the type of analysis or identify specific analysis information), which is analysis information of the network slice load level, specifically: Analytics ID = "Load level information";
b. analytics filter information, which includes the VPLMN S-NSSAI, and may further include the slice instance identifier (NSI ID: Network Slice ID) of the VPLMN.

The analysis request may further carry the following information:
c. network function type (list of NF types), used to indicate the functional entity types that are subjected to the load or performance analysis, etc., such as the SMF and the UPF;
d. load level threshold value, used to indicate that when the load level of the network slice in the VPLMN or HPLMN meets the threshold condition (e.g., above or below the threshold), specific analysis information needs to be sent.

Step 11-13: same as steps 7-9 in Embodiment 1.

Step 14: sending, by the V-NWDAF, the analysis information of the VPLMN slice to the V-DCCF.

Step 15: if step 9 has been executed, sending, by the V-NWDAF, the analysis information of both the VPLMN slice and the HPLMN slice to the V-DCCF, including the analysis information of the mapped HPLMN slice and the analysis information of the VPLMN slice obtained by the V-NWDAF. In this case, step 14 mentioned above may be skipped.

Step 16: sending, by the V-DCCF, the analysis information of both the VPLMN slice and the HPLMN slice to the V-NF, which includes the analysis information of the mapped HPLMN slice and the analysis information of the VPLMN slice; alternatively, sending, by the V-DCCF, the analysis information of the HPLMN slice to V-NF, i.e., the analysis information of the mapped HPLMN slice. In this case, steps 10-14 mentioned above may be skipped.

It should be noted that steps 3-8 and steps 10-14 may be executed in parallel in this embodiment.

In addition, the process of this embodiment is also applicable to the H-NF obtaining analysis information of the VPLMN, as long as interchanging "H-" and "V-" in the process. That is, when "H-" and "V-" are interchanged in the process of this embodiment, it will be the process of H-NF obtaining analysis information of the network.

### Embodiment 3

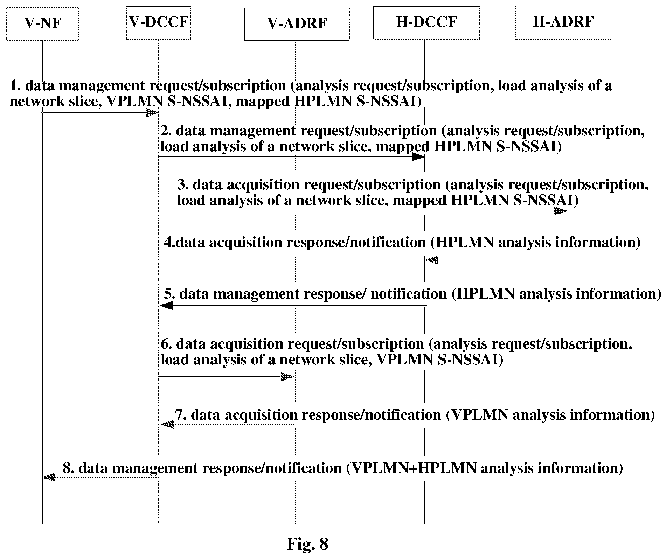

This embodiment mainly describes how the V-NF obtains the analysis information of the HPLMN from the ADRF through the V-DCCF, as shown in Fig. 8, it includes the following steps.

Step 1-2: same as steps 1-2 in Embodiment 2.

Step 3: sending, by the H-DCCF, an analysis data acquisition request of a network slice to H-ADRF, requesting the H-ADRF to provide analysis information of a specific slice of the HPLMN. Specifically, the analysis data acquisition request carries an analysis request parameter, which carries the same information as the analysis request parameter in the analysis data management request in step 2.

Step 4: sending, by the H-ADRF, the stored analysis information of the mapped HPLMN slice to the H-DCCF.

Step 5: sending, by the H-DCCF, the analysis information of the mapped HPLMN slice to the V-DCCF.

Step 6: sending, by the V-DCCF, the analysis data acquisition request of the network slice to V-ADRF, requesting the V-ADRF to provide analysis information of a specific slice of a VPLMN. Specifically, the analysis data acquisition request carries VPLMN-related information in the analysis request parameter in step 1, which is the same as the information carried in the analysis request of step 10 in Embodiment 2.

Step 7: sending, by the V-ADRF, the stored analysis information of the VPLMN slice to the V-DCCF.

Step 8: sending, by the V-DCCF, the analysis information of both the VPLMN slice and the HPLMN slice to the V-NF, which includes the analysis information of the mapped HPLMN slice and the analysis information of the VPLMN slice; alternatively, sending, by the V-DCCF, the analysis information of the HPLMN slice to V-NF, i.e., the analysis information of the mapped HPLMN slice. In this case, steps 6-7 mentioned above may be skipped.

In addition, the process of this embodiment is also applicable to the H-NF obtaining analysis information of the VPLMN as long as interchanging "H-" and "V-" in the process. That is, when "H-" and "V-" are interchanged in the process of this embodiment, it will be the process of the H-NF obtaining analysis information of the network.

### Embodiment 4

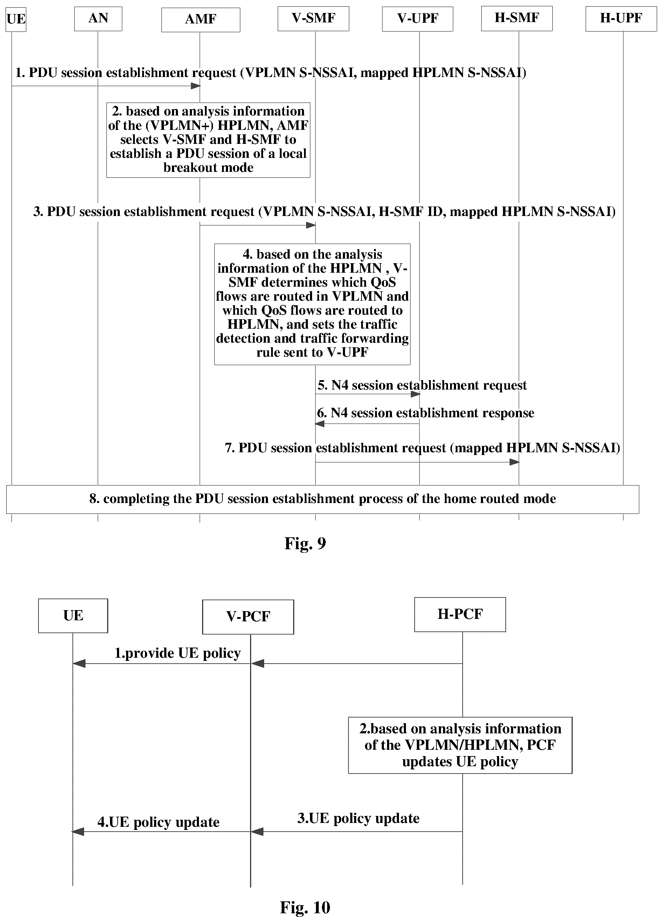

This embodiment mainly describes how a AMF and a SMF of a VPLMN use analysis information of an HPLMN to determine routing of a PDU session, as shown in Fig. 9, it includes the following steps.

Step 1: sending, by a UE, a Non-Access Stratum (NAS) message to the AMF, wherein the NAS message carries the PDU session establishment request, the DNN, the VPLMN S-NSSAI, the mapped HPLMN S-NSSAI, and other parameters. The VPLMN S-NSSAI and mapped HPLMN S-NSSAI indicate the network slice of the VPLMN for establishing the PDU session requested by the UE, and the network slice of the HPLMN to which the slice is mapped, respectively.

Step 2: determining, by the AMF based on the "LBO Roaming Information" parameter of the "SMF selected subscription data" in the UE subscription data obtained from the HPLMN UDM, whether to allow the UE to establish the PDU session of a local breakout mode for the data network identified by the DNN in the network slice identified by the VPLMN S-NSSAI (i.e. (VPLMN S-NSSAI, DNN)).

If no (i.e., the PDU session of the local breakout mode is not allowed), the AMF determines to establish a PDU session of a home routed mode for the UE.

If yes (i.e., the PDU session of the local breakout mode is allowed), the AMF makes the following judgments and decisions based on the analysis information of the slice of the VPLMN (i.e., the slice identified by the VPLMN S-NSSAI) and the analysis information of the slice of the HPLMN (i.e., the slice identified by the mapped HPLMN S-NSSAI):
if the load (or resource usage, performance, service experience, etc.) of the VPLMN slice is within an acceptable range (e.g., the load or the percentage of used resources is lower than a preset threshold value), the AMF determines to establish the PDU session of the local breakout mode for the UE;
if the load (or resource usage) of the VPLMN slice is high (e.g., above a preset threshold value), or performance and service experience are low (e.g., below a preset threshold value), while the load (or resource usage, performance, service experience, etc.) of the HPLMN slice is within an acceptable range, and the home routed mode can meet a service requirement, the AMF determines to establish the PDU session of the home-routed mode for the UE.

If the AMF determines to establish the PDU session of the home-routed mode for the UE, the AMF performs the following actions:
selecting an instance of the HPLMN slice (if there are multiple instances of the slice) and an H-SMF in the slice or the selected slice instance based on the analysis information of the HPLMN slice, such as the load, resource usage, and/or performance of the slice or each slice instance;
selecting an instance of the VPLMN slice (if there are multiple instances of the slice) and a V-SMF in the slice or the selected slice instance based on the analysis information of the VPLMN slice, such as the load, resource usage, and/or performance of the slice or each slice instance.

The following steps are executed when the AMF determines to establish the PDU session of the home-routed mode for the UE.

Step 3: initiating, by the UE, an establishment service request of the PDU session to the V-SMF, wherein the request includes the H-SMF ID, the VPLMN S-NSSAI, the mapped HPLMN S-NSSAI, the DNN, and other parameters.

Step 4: determining, by the SMF, the management of the PDU session based on one or more of the following information:
1). analysis information of the HPLMN slice (i.e., slice identified by the mapped HPLMN S-NSSAI), such as the load, resource usage, and/or performance of the slice or a slice instance containing the H-SMF (if there are multiple instances of the slice);
2). analysis information of the VPLMN slice (i.e., the slice identified by the VPLMN S-NSSAI), such as the load, resource usage, and/or performance of the slice or the slice instance containing the V-SMF (if there are multiple instances of the slice) and/or the V-UPF;
3). the load, resource usage, and/or performance of the V-SMF itself;
4). a QoS parameter of a QoS flow in the PDU session;
5). local configuration, etc.

Specifically, for example, the V-SMF can determine, based on the analysis information of the HPLMN slice and/or the analysis information of the VPLMN slice, to route one or more QoS flows in the PDU session directly to the local data network (DN) through the V-UPF, and route other QoS flows to the home network through the V-UPF (i.e., to the DN of HPLMN through the V-UPF and H-UPF).

For example, the QoS flow of the ultra-low latency service (e.g., packet delay target <10 milliseconds) is routed directly to the local DN through the V-UPF;

For the QoS flows of the service with a low latency requirement but a high reliability (/error rate) requirement, if the load, resource usage, and/or performance of the HPLMN slice (or slice instance) are good, while the load (or resource usage) of the V-UPF is high or the performance of the V-UPF is low, such as above or below a predetermined threshold, then the QoS flows may be routed to the H-UPF through the V-UPF, with the user plane data being processed by the H-UPF/HPLMN.

The V-SMF sets, based on the above decision, the Packet Detection Rule (PDR) and the Forwarding Action Rule (FAR) to be sent to the V-UPF (or the UPF in the VPLMN with an uplink classification and/or a branch point UL CL/BP function).

Step 5: initiating, by the V-SMF, an N4 interface session establishment request to the V-UPF (or the UPF in the VPLMN with an uplink classification/branch point UL CL/BP function), wherein the request carries the above PDR, FAR, and other parameters.

Step 6: responding to, by the V-UPF, an N4 interface session establishment response.

Step 7: initiating, by the V-SMF, a PDU session establishment service request to the H-SMF, wherein the request includes the mapped HPLMN S-NSSAI, the DNN, the V-SMF ID, and the relevant parameters (e.g., a QoS flow identifier, a QoS rule, and a QoS parameter) of one or more QoS flows that implement the home routed mode (i.e., routing to the home network).

Step 8: executing the process of establishing the PDU session of the home routed mode.

### Embodiment 5

This embodiment mainly describes how the H-PCF/V-PCF uses the analysis information of the HPLMN and the VPLMN to update the UE policy, as shown in Fig. 10, it includes the following step.

Step 1: sending, by the H-PCF, the UE Route Selection Policy (URSP) to a roaming UE through the V-PCF. In the URSP, data of an application 1 for the UE is set to be transmitted through a PDU session in a network slice identified by the VPLMN S-NSSAI1.

The URSP is used to instruct the UE to map the data of the specific application to a specific PDU session for transmission.

Step 2: making, by the H-PCF based on the analysis information of the VPLMN slice (i.e., the network slice identified by the VPLMN S-NSSAI1) and/or the analysis information of the HPLMN slice (i.e., the network slice identified by the HPLMN S-NSSAI2 mapped by the VPLMN S-NSSAI1), the following judgments and decisions:
1. if the load (or resource usage, performance, service experience, etc.) of the VPLMN slice identified by the S-NSSAI1 no longer meets a QoS requirement for the data transmission of application 1, for example, the load (or resource usage) is high or the performance, service experience, etc. is low, and thus cannot meet the a delay requirement or a reliability requirement for the data transmission of application 1, then H-PCF can modify the URSP, and set the data of the present application 1 for the UE to be transmitted through the PDU session established in the network slice identified by the VPLMN S-NSSAI3. The network slice identified by the VPLMN S-NSSAI3 meets the QoS requirement of the present application 1;
2. if the load (or resource usage, performance, service experience, etc.) of the HPLMN slice identified by the HPLMN S-NSSAI3 mapped by the VPLMN S-NSSAI1 no longer meets the QoS requirement for data transmission of application 1, and the data of the present application 1 for the UE is transmitted through the PDU session of the home routed mode (i.e., also through the HPLMN slice identified by the HPLMN S-NSSAI3), then the H-PCF can modify the URSP, and set the data of the present application 1 for the UE to be transmitted through the PDU session established in the network slice identified by VPLMN S-NSSAI4. Both the VPLMN network slice identified by the VPLMN S-NSSAI4 and the mapped network slice of the HPLMN identified by the HPLMN S-NSSAI5 meet the QoS requirement for application 1.

The H-PCF can obtain the QoS requirement for data transmission of application 1 from the Application Function (AF) entity or the Network Exposure Function (NEF) entity.

Step 3: updating, by the H-PCF, the UE route selection policy for the roaming UE through the V-PCF, wherein the policy includes the modification made in step 2.

It should be noted that, in this embodiment, the V-PCF may further set and update the URSP based on the analysis information of the VPLMN and/or the analysis information of the HPLMN, and provide it to the UE. This process is similar as that mentioned above, with a difference therebetween is that the H-PCF is replaced by the V-PCF, and the V-PCF directly sends the URSP to the UE.

In the embodiments of the present application, the followings may be achieved.

The V-NF (the network function in the VPLMN) obtains analysis information of the HPLMN through the V-NWDAF from the H-NWDAF. Conversely, H-NF (network function in HPLMN) obtains from the V-NWDAF the analysis information of VPLMN through the H-NWDAF.

The V-NF obtains from the H-NWDAF the analysis information of the HPLMN through the V-DCCF and the H-DCCF. Conversely, the H-NF obtains from the V-NWDAF the analysis information of the VPLMN through the H-DCCF and the V-DCCF.

The V-NF obtains from the H-ADRF the analysis information of the HPLMN through the V-DCCF and the H-DCCF. Conversely, the H-NF obtains the analysis information of the VPLMN through the H-DCCF and the V-DCCF from the V-ADRF.

The AMF determines whether the PDU session of the roaming UE adopts a home routed mode or a local breakout mode or selects the H-SMF for the PDU session of the home routed mode based on the analysis information of the HPLMN and/or the analysis information of the VPLMN.

The V-SMF determines, based on the analysis information of the HPLMN and/or the analysis information of the VPLMN, to route one or more QoS flows in the PDU session directly to the local Data Network (DN) through the V-UPF, and to route other QoS flows to the home network through the V-UPF (i.e., to the DN of the HPLMN through the V-UPF and H-UPF); or the V-SMF determines, based on the analysis information of the HPLMN and/or the analysis information of VPLMN, to route one or more QoS flows in the PDU session to the home network through the V-UPF, and to route other QoS flows directly to the local data network through the V-UPF. Accordingly, the V-SMF sets the Packet Detection Rule (PDR) and the Forwarding Action Rule (FAR) for the V-UPF (or the UPF that is in the VPLMN and has an uplink classification and/or a branch point UL CL/BP function).

The H-PCF or the V-PCF uses the analysis information of the HPLMN and the analysis information of the VPLMN to update the UE Route Selection Policy (URSP), specifically, to update, based on the analysis information of the HPLMN slice and the VPLMN slice, the rules for determining the slice/slices of the PDU session on which the application data is transmitted in the URSP.

The above analysis information may be the analysis information of the slice. At this time, the V-NF provides the mapped HPLMN S-NSSAI (i.e., the slice information of the HPLMN mapped by the VPLMN S-NSSAI) to the V-NWDAF (or the V-DCCF), so that the V-NWDAF (or the V-DCCF) requests the analysis information of the network slice of the HPLMN identified by the mapped HPLMN S-NSSAI from the H-NWDAF (or the H-DCCF).

According to the network analysis method provided by the embodiments of the present application, it may determine an appropriate PDU session data routing mechanism (home routed mode or local breakout mode) for different applications of a roaming terminal based on a network condition (e.g., congestion, load, performance, service experience, etc.) of a home network or a visited network. It selects the optimal session management function (such as an H-SMF serving the PDU session of the home routed mode), thereby improving the success rate of the PDU session establishment and the service performance in the roaming scenario.

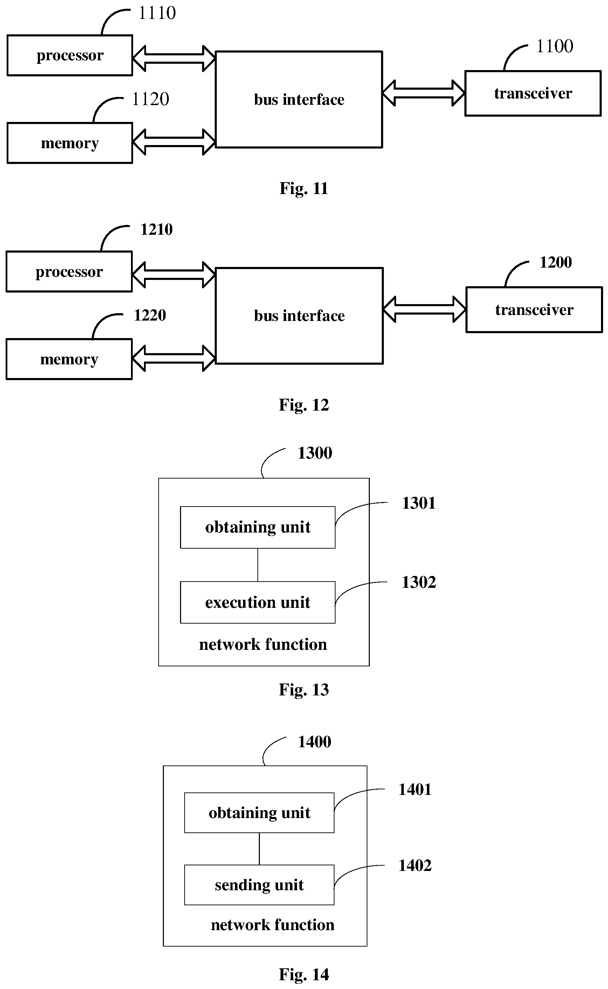

Refer to Fig. 11, which is a structural diagram of a network function provided by the embodiments of the present disclosure. The network function is a first network function. As shown in Fig. 11, it includes a memory 1120, a transceiver 1100, and a processor 1110,
wherein the memory 1120 is configured to store a computer program; the transceiver 1100 is configured to receive and send data under the control of the processor 1110; the processor 1110 is configured to read the computer program in the memory 1120 and perform the following operations:
obtaining analysis information of a target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
performing, based on the analysis information of the target network, management of a Protocol Data Unit (PDU) session in a roaming scenario.

In Fig. 11, the bus architecture may include any number of interconnected buses and bridges, and connects various circuits including one or more processors represented by the processor 1110 and the memory represented by the memory 1120. The bus architecture may further link together various other circuits such as peripherals, voltage regulators, and power management circuits, which are all well known in the art and therefore will not be described further herein. The bus interface provides the interface. The transceiver 1100 may be a plurality of elements, including a transmitter and a receiver, to allow for communication with various other apparatuses on the transmission medium. The transmission medium includes wireless channels, wired channels, optical cables, and other transmission media. For different user equipments, the user interface 1130 may further be an interface capable of externally or internally connecting a required device. The connected device includes but is not limited to a keypad, a display, a speaker, a microphone, a joystick, etc.

The processor 1110 is responsible for managing the bus architecture and general processing, and the memory 1120 can store data used by the processor 1110 when performing operations.

Optionally, the processor 1110 may be a Central Processing Unit (CPU), an Application Specific Integrated Circuit (ASIC), a Field Programmable Gate Array (FPGA) or Complex Programmable Logic Device (CPLD). The processor may further adopt a multi-core architecture.

By calling the computer program stored in the memory, the processor is configured to perform any of the methods provided by the embodiments of the present disclosure according to the obtained executable instructions. The processor and the memory may further be physically separated.

Optionally, the performing the management of the PDU session in the roaming scenario includes at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

Optionally, establishing the PDU session of the local breakout mode when the analysis information of the second network meets a predetermined local breakout condition, and/or when the analysis information of the first network meets the predetermined local breakout condition;
and/or,
establishing the PDU session of the home routed mode when the analysis information of the second network meets a first predetermined home routed condition, and/or when the analysis information of the first network meets a second predetermined home routed condition.

Optionally, the processor 1110 is also configured to:
in the case of establishing the PDU session of the home routed mode for the terminal, selecting, based on the analysis information of the first network, a network slice instance of the HPLMN and a session management function within the network slice instance.

Optionally, determining that at least one data flow in the PDU session uses the home routed mode, and other data flows in the PDU session use the local breakout mode, includes:
in the case that the analysis information of the first network meets a third predetermined home routed condition, and/or, the analysis information of the second network meets a fourth predetermined home routed condition, determining that the at least one data flow in the PDU session uses the home routed mode, and other data flows in the PDU session use the local breakout mode;
   or,
determining that the at least one data flow in the PDU session uses the local breakout mode, and other data flows in the PDU session use the home routed mode includes:
   in the case that the analysis information of the second network meets the first predetermined local breakout condition, determining that at least one data flow in the PDU session uses local breakout mode, and other data flows in the PDU session use the home routed mode.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the management of the PDU session in the roaming scenario includes:
updating the terminal with a network slice selection policy, wherein the network slice selection policy includes information of the first network slice and/or information of the second network slice, which is used to indicate that the terminal transmits data of a third application through the PDU session in the first network slice and/or the second network slice.

Optionally, the performing the management of the PDU session in the roaming scenario includes at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

Optionally, the analysis information includes at least one of the followings:
performance analysis information, service experience analysis information, load analysis information, congestion analysis information, resource analysis information, or state analysis information.

Optionally, the obtaining the analysis information of the target network, includes:
obtaining the analysis information of the target network from a second network function, or obtaining, by the first network function through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, through the third network function, the analysis information of the target network from the second network function, includes:
sending a first request to the third network function, wherein the first request carries information of the first network and information of the second network, to cause the third network function to send a second request to the second network function based on the first request, wherein the second request carries the information of the second network for requesting the analysis information of the second network; and the third network function receives a first response sent by the second network function based on the second request, wherein the first response includes the analysis information of the second network;
receiving a second response sent by the third network function based on the first response, wherein the second response carries the analysis information of the target network.

Optionally, the information of the first network includes information of the first network slice in the first network; the information of the second network includes information of the second network slice in the second network.

Optionally, the first network function includes one of the followings:
access and mobility management function, session management function, or policy control function.

It should be noted here that the above-mentioned network functions provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

Refer to Fig. 12, which is a structural diagram of another network function provided by the embodiments of the present disclosure. The network function is a second network function or a third network function. As shown in Fig. 12, it includes a memory 1220, a transceiver 1200, and a processor 1210,
wherein the memory 1220 is configured to store a computer program; the transceiver 1200 is configured to receive and send data under the control of the processor 1210; the processor 1210 is configured to read the computer program in the memory 1220 and perform the following operations:
obtaining analysis information of a target network, wherein the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
sending the analysis information of the target network to a first network function, wherein the analysis information of the target network is used by the first network function to perform management of a Protocol Data Unit (PDU) session in a roaming scenario.

In Fig. 12, the bus architecture may include any number of interconnected buses and bridges, and connects various circuits including one or more processors represented by the processor 1210 and the memory represented by the memory 1220. The bus architecture may further link together various other circuits such as peripherals, voltage regulators, and power management circuits, which are all well known in the art and therefore will not be described further herein. The bus interface provides the interface. The transceiver 1200 may be a plurality of elements, including a transmitter and a receiver, to allow for communication with various other apparatuses on the transmission medium. The transmission medium includes wireless channels, wired channels, optical cables, and other transmission media. For different user equipments, the user interface 1230 may further be an interface capable of externally or internally connecting a required device. The connected device includes but is not limited to a keypad, a display, a speaker, a microphone, a joystick, etc.

The processor 1210 is responsible for managing the bus architecture and general processing, and the memory 1220 can store data used by the processor 1210 when performing operations.

Optionally, the processor 1210 may be a Central Processing Unit (CPU), an Application Specific Integrated Circuit (ASIC), a Field Programmable Gate Array (FPGA) or Complex Programmable Logic Device (CPLD). The processor may further adopt a multi-core architecture.

By calling the computer program stored in the memory, the processor is configured to perform any of the methods provided by the embodiments of the present disclosure according to the obtained executable instructions. The processor and the memory may further be physically separated.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the analysis information includes at least one of the followings:
performance analysis information, service experience analysis information, load analysis information, congestion analysis information, resource analysis information, or state analysis information.

Optionally, obtaining the analysis information of the target network includes:
obtaining, by the second network function, the analysis information of the target network, or obtaining, by the third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the third network function, the analysis information of the target network from the second network function, including:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response including the analysis information of the second network.

Optionally, the information of the first network includes information of a first network slice in the first network; the information of the second network includes information of a second network slice in the second network.

It should be noted here that the above-mentioned network functions provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

Refer to Fig. 13, which is a structural diagram of yet another network function provided by the embodiments of the present disclosure. The network function is a first network function or a network analysis apparatus. As shown in Fig. 13, the network function 1300 includes:
an obtaining unit 1301, configured to obtain analysis information of the target network, the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
an execution unit 1302, configured to perform management of a Protocol Data Unit (PDU) session in a roaming scenario based on the analysis information of the target network.

Optionally, the performing the management of the PDU session in the roaming scenario includes at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

Optionally, establishing the PDU session of the local breakout mode when the analysis information of the second network meets a predetermined local breakout condition, and/or when the analysis information of the first network meets the predetermined local breakout condition;
and/or,
establishing the PDU session of the home routed mode when the analysis information of the second network meets a first predetermined home routed condition, and/or when the analysis information of the first network meets a second predetermined home routed condition.

Optionally, the network function further includes:
selection unit, configured to select the network slice instance of the HPLMN and the session management function within the network slice instance based on the analysis information of the first network when establishing the PDU session of the home routed mode for the terminal.

Optionally, determining that at least one data flow in the PDU session uses the home routed mode, and other data flows in the PDU session use the local breakout mode, includes:
in the case that the analysis information of the first network meets a third predetermined home routed condition, and/or, the analysis information of the second network meets a fourth predetermined home routed condition, determining that the at least one data flow in the PDU session uses the home routed mode, and other data flows in the PDU session use the local breakout mode;
   or,
determining that the at least one data flow in the PDU session uses the local breakout mode, and other data flows in the PDU session use the home routed mode includes:
   in the case that the analysis information of the second network meets the first predetermined local breakout condition, determining that at least one data flow in the PDU session uses local breakout mode, and other data flows in the PDU session use the home routed mode.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the management of the PDU session in the roaming scenario includes:
updating the terminal with a network slice selection policy, wherein the network slice selection policy includes information of the first network slice and/or information of the second network slice, which is used to indicate that the terminal transmits data of a third application through the PDU session in the first network slice and/or the second network slice.

Optionally, the performing the management of the PDU session in the roaming scenario includes at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

Optionally, the analysis information includes at least one of the followings:
performance analysis information, service experience analysis information, load analysis information, congestion analysis information, resource analysis information, or state analysis information.

Optionally, the obtaining the analysis information of the target network, includes:
obtaining the analysis information of the target network from a second network function, or obtaining, by the first network function through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, through the third network function, the analysis information of the target network from the second network function, includes:
sending a first request to the third network function, wherein the first request carries information of the first network and information of the second network, to cause the third network function to send a second request to the second network function based on the first request, wherein the second request carries the information of the second network for requesting the analysis information of the second network; and the third network function receives a first response sent by the second network function based on the second request, wherein the first response includes the analysis information of the second network;
receiving a second response sent by the third network function based on the first response, wherein the second response carries the analysis information of the target network.

Optionally, the information of the first network includes information of the first network slice in the first network; the information of the second network includes information of the second network slice in the second network.

Optionally, the first network function includes one of the followings:
access and mobility management function, session management function, or policy control function.

It should be noted here that the above-mentioned network functions provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

Refer to Fig. 14, which is a structural diagram of still yet another network function provided by the embodiments of the present disclosure. The network function is a second network function, a third network function, or a network analysis apparatus. As shown in Fig. 14, the network function 1400 includes:
an obtaining unit 1400, configured to obtain analysis information of the target network, the analysis information of the target network includes at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
a sending unit 1402, configured to send the analysis information of the target network to the first network function, the analysis information of the target network is used by the first network function to perform management of a Protocol Data Unit (PDU) session in a roaming scenario.

Optionally, the analysis information of the first network includes analysis information of a first network slice in the first network;
the analysis information of the second network includes analysis information of a second network slice in the second network;
wherein there is a mapping relationship between the first network slice and the second network slice.

Optionally, the analysis information includes at least one of the followings:
performance analysis information, service experience analysis information, load analysis information, congestion analysis information, resource analysis information, or state analysis information.

Optionally, the obtaining the analysis information of the target network, includes:
obtaining the analysis information of the target network from a second network function, or obtaining, through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network includes the analysis information of the second network; or, the first network function belongs to the second network, the second network function belongs to the first network, and the analysis information of the target network includes the analysis information of the first network.

Optionally, the obtaining, by the third network function, the analysis information of the target network from the second network function, including:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response including the analysis information of the second network.

Optionally, the information of the first network includes information of a first network slice in the first network; the information of the second network includes information of a second network slice in the second network.

It should be noted here that the above-mentioned communication device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which may be a personal computer, a server, or a network device, etc.) or a processor to execute all or part of the steps of the methods described in various embodiments of the present disclosure. The aforementioned storage media include: Universal Serial Bus (USB) flash disk, removable hard disk, Read-Only Memory (ROM), Random Access Memory (RAM), magnetic disk or optical disc and other media that can store program code.

An embodiment of the present application provides a processor-readable storage medium. The processor-readable storage medium stores a computer program. The computer program is used to cause the processor to execute the network analysis method on the first network function side provided in the embodiment of the present application, or the computer program is used to cause the processor to execute the network analysis method on the second network function side or third network function side provided in the embodiment of the present application.

The processor-readable storage medium may be any available media or data storage device that the processor can access, including but not limited to magnetic storage (such as floppy disks, hard disks, magnetic tapes, Magneto-Optical disks (MO), etc.), optical storage (such as Compact Disc (CD), Digital Versatile Disc (DVD), Blu-ray Disc (BD), High-definition Versatile Disc (HVD), etc.), and semiconductor memories (such as Read-Only Memory (ROM), Erasable Programmable ROM (EPROM), Electrically Erasable Programmable ROM (EEPROM), non-volatile memory (NAND FLASH), Solid State Drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present application has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, may be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

It should be understood that the division of each module above is only a division of logical functions. In actual implementation, it may be fully or partially integrated into one physical entity, or it may further be physically separated. These modules can all be implemented in the form of software called by processing elements; they may further all be implemented in the form of hardware; or some modules may be implemented in the form of software called by processing elements, and some modules may be implemented in the form of hardware. For example, a certain module may be a separate processing element, or it may be integrated and implemented in a chip of the above-mentioned device. In addition, it may further be stored in the memory of the above-mentioned apparatus in the form of program codes, and called by a processing element of the above-mentioned apparatus to execute the functions of the modules identified above. The implementation of other modules is similar. In addition, all or part of these modules may be integrated together or implemented independently. The processing element described here may be an integrated circuit with signal processing capabilities. During the implementation process, each step of the above method or each of the above modules may be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element may be a general-purpose processor, such as a Central Processing Unit (CPU) or other processors that can call the program codes. For another example, these modules may be integrated together and implemented in the form of a System-On-A-Chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Obviously, those skilled in the art can make various changes and modifications to the present application without departing from the spirit and scope of the present application. In this way, if these modifications and variations of the present application fall within the scope of the claims of the present application and equivalent thereof, the present application is also intended to include these modifications and variations.

## Claims

1. A network analysis method, comprising:
obtaining, by a first network function, analysis information of a target network, wherein the analysis information of the target network comprises at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
performing, by the first network function based on the analysis information of the target network, management of a Protocol Data Unit (PDU) session in a roaming scenario.

2. The network analysis method according to claim 1, wherein the performing the management of the PDU session in the roaming scenario comprises at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

3. The network analysis method according to claim 2, wherein the establishing the PDU session of the local breakout mode comprises: establishing the PDU session of the local breakout mode when the analysis information of the second network meets a predetermined local breakout condition, and/or when the analysis information of the first network meets the predetermined local breakout condition;
and/or,
the establishing the PDU session of the home routed mode comprises: establishing the PDU session of the home routed mode when the analysis information of the second network meets a first predetermined home routed condition, and/or when the analysis information of the first network meets a second predetermined home routed condition.

4. The network analysis method according to claim 2, further comprising:
in the case of establishing the PDU session of the home routed mode for the terminal, selecting, by the first network function based on the analysis information of the first network, a network slice instance of the HPLMN and a session management function within the network slice instance.

5. The network analysis method according to claim 2, wherein
determining that at least one data flow in the PDU session uses the home routed mode, and other data flows in the PDU session use the local breakout mode, comprises:
in the case that the analysis information of the first network meets a third predetermined home routed condition, and/or, the analysis information of the second network meets a fourth predetermined home routed condition, determining that the at least one data flow in the PDU session uses the home routed mode, and other data flows in the PDU session use the local breakout mode;
or,
determining that the at least one data flow in the PDU session uses the local breakout mode, and other data flows in the PDU session use the home routed mode comprises:
in the case that the analysis information of the second network meets the first predetermined local breakout condition, determining that at least one data flow in the PDU session uses local breakout mode, and other data flows in the PDU session use the home routed mode.

6. The network analysis method according to claim 1, wherein the analysis information of the first network comprises analysis information of a first network slice in the first network;
the analysis information of the second network comprises analysis information of a second network slice in the second network;
wherein there is a mapping relationship between the first network slice and the second network slice.

7. The network analysis method according to claim 6, wherein the management of the PDU session in the roaming scenario comprises:
updating the terminal with a network slice selection policy, wherein the network slice selection policy comprises information of the first network slice and/or information of the second network slice, which is used to indicate that the terminal transmits data of a third application through the PDU session in the first network slice and/or the second network slice.

8. The network analysis method according to claim 6, wherein the performing the management of the PDU session in the roaming scenario comprises at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

9. The network analysis method according to any one of claims 1 to 8, wherein the analysis information comprises at least one of the followings:
performance analysis information, service experience analysis information, load analysis information, congestion analysis information, resource analysis information, or state analysis information.

10. The network analysis method according to any one of claims 1 to 8, wherein the obtaining, by first network function, the analysis information of the target network, comprises:
obtaining, by the first network function, the analysis information of the target network from a second network function, or obtaining, by the first network function through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network comprises the analysis information of the second network; or, the first network function belongs to the second network, the second network function belongs to the first network, and the analysis information of the target network comprises the analysis information of the first network.

11. The network analysis method according to claim 10, wherein the obtaining, by the first network function through the third network function, the analysis information of the target network from the second network function, comprises:
sending, by the first network function, a first request to the third network function, wherein the first request carries information of the first network and information of the second network, to cause the third network function to send a second request to the second network function based on the first request, wherein the second request carries the information of the second network for requesting the analysis information of the second network; and the third network function receives a first response sent by the second network function based on the second request, wherein the first response comprises the analysis information of the second network;
receiving, by the first network function, a second response sent by the third network function based on the first response, wherein the second response carries the analysis information of the target network.

12. The network analysis method according to claim 11, wherein the information of the first network comprises information of the first network slice in the first network; the information of the second network comprises information of the second network slice in the second network.

13. The network analysis method according to any one of claims 1 to 8, wherein the first network function comprises one of the followings:
access and mobility management function, session management function, or policy control function.

14. A network analysis method, performed by a second network function or a third network function, comprising:
obtaining analysis information of a target network, wherein the analysis information of the target network comprising at least one of the followings: analysis information of a first network, or analysis information of a second network; the first network is a Home Public Land Mobile Network (HPLMN), and the second network is a Visited Public Land Mobile Network (VPLMN); or, the first network is a VPLMN, and the second network is an HPLMN;
sending the analysis information of the target network to a first network function, wherein the analysis information of the target network is used by the first network function to perform management of a Protocol Data Unit (PDU) session in a roaming scenario.

15. The network analysis method according to claim 14, wherein the analysis information of the first network comprises analysis information of a first network slice in the first network;
the analysis information of the second network comprises analysis information of a second network slice in the second network;
wherein there is a mapping relationship between the first network slice and the second network slice.

16. The network analysis method according to claim 14 or 15, wherein the analysis information comprises at least one of the followings:
performance analysis information, service experience analysis information, load analysis information, congestion analysis information, resource analysis information, or state analysis information.

17. The network analysis method according to claim 14 or 15, wherein obtaining the analysis information of the target network comprises:
obtaining, by the second network function, the analysis information of the target network, or obtaining, the third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network comprises the analysis information of the second network; or, the first network function belongs to the second network, the second network function belongs to the first network, and the analysis information of the target network comprises the analysis information of the first network.

18. The network analysis method according to claim 17, wherein the obtaining, by the third network function, the analysis information of the target network from the second network function, comprising:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response comprising the analysis information of the second network.

19. The network analysis method according to claim 18, wherein the information of the first network comprises information of a first network slice in the first network; the information of the second network comprises information of a second network slice in the second network.

20. A network function, wherein the network function is a first network function, comprising: a memory, a transceiver, and a processor, wherein
the memory is configured to store a computer program; the transceiver is configured to receive and send data under the control of the processor; the processor is configured to read the computer program in the memory and perform the following operations:
obtaining analysis information of the target network, wherein the analysis information of the target network comprises at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
performing, based on the analysis information of the target network, management of a Protocol Data Unit (PDU) session in a roaming scenario.

21. The network function according to claim 20, wherein the performing the management of the PDU session in the roaming scenario comprises at least one of the followings:
establishing the PDU session of a local breakout mode;
establishing the PDU session of a home routed mode;
selecting a session management function in the HPLMN for the PDU session of the home routed mode;
determining that at least one data flow in the PDU session uses the home routed mode, and another data flow in the PDU session uses the local breakout mode;
determining that at least one data flow in the PDU session uses the local breakout mode, and another data flow in the PDU session uses the home routed mode;
setting a packet detection rule related to the PDU session or a forwarding action rule related to the PDU session; or
updating a terminal with a routing selection policy related to the PDU session.

22. The network function according to claim 21, wherein the establishing the PDU session of the local breakout mode comprises: establishing the PDU session of the local breakout mode when the analysis information of the second network meets a predetermined local breakout condition, and/or when the analysis information of the first network meets the predetermined local breakout condition;
and/or,
the establishing the PDU session of the home routed mode comprises: establishing the PDU session of the home routed mode when the analysis information of the second network meets a first predetermined home routed condition, and/or when the analysis information of the first network meets a second predetermined home routed condition.

23. The network function according to claim 21, wherein the processor is further configured to:
in the case of establishing the PDU session of the home routed mode for the terminal, select, based on the analysis information of the first network, a network slice instance of the HPLMN and a session management function within the network slice instance.

24. The network function according to claim 21, wherein
determining that at least one data flow in the PDU session uses the home routed mode, and other data flows in the PDU session use the local breakout mode, comprises:
in the case that the analysis information of the first network meets a third predetermined home routed condition, and/or, the analysis information of the second network meets a fourth predetermined home routed condition, determining that the at least one data flow in the PDU session uses the home routed mode, and other data flows in the PDU session use the local breakout mode;
or,
determining that the at least one data flow in the PDU session uses the local breakout mode, and other data flows in the PDU session use the home routed mode comprises:
in the case that the analysis information of the second network meets the first predetermined local breakout condition, determining that at least one data flow in the PDU session uses local breakout mode, and other data flows in the PDU session use the home routed mode.

25. The network function according to claim 20, wherein the analysis information of the first network comprises analysis information of a first network slice in the first network;
the analysis information of the second network comprises analysis information of a second network slice in the second network;
wherein there is a mapping relationship between the first network slice and the second network slice.

26. The network function according to claim 25, wherein the performing the management of the PDU session in the roaming scenario comprises at least one of the followings:
in the case of determining, based on the analysis information of the second network slice, that the second network slice does not meet data transmission requirement of a first application of the terminal, determining a first routing selection policy for the terminal, wherein the first routing selection policy is used to indicate that the data of the first application is transmitted through the PDU session in a third network slice within the second network, wherein the third network slice meets the data transmission requirement of the first application; or
in the case of determining, based on the analysis information of the first network slice, that the first network slice does not meet data transmission requirement of a second application of the terminal, determining a second routing selection policy for the terminal, wherein the second routing selection policy is used to indicate that the data of the second application is transmitted through the PDU session in a fourth network slice within the second network, wherein the fourth network slice and the network slice in the first network mapped by the fourth network slice meet the data transmission requirement of the second application.

27. The network function according to any one of claims 20 to 26, wherein the obtaining, the analysis information of the target network, comprises:
obtaining, the analysis information of the target network from a second network function, or obtaining, through a third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network comprises the analysis information of the second network; or, the first network function belongs to the second network, the second network function belongs to the first network, and the analysis information of the target network comprises the analysis information of the first network.

28. A network function performed by a second network function or a third network function, comprising: a memory, a transceiver, and a processor, wherein
the memory is configured to store a computer program; the transceiver is configured to receive and send data under the control of the processor; the processor is configured to read the computer program in the memory and perform the following operations:
obtaining analysis information of a target network, wherein the analysis information of the target network comprising at least one of the followings: analysis information of a first network, or analysis information of a second network; the first network is a Home Public Land Mobile Network (HPLMN), and the second network is a Visited Public Land Mobile Network (VPLMN); or, the first network is a VPLMN, and the second network is an HPLMN;
sending the analysis information of the target network to a first network function, wherein the analysis information of the target network is used by the first network function to perform management of a Protocol Data Unit (PDU) session in a roaming scenario.

29. The network function according to claim 28, wherein the analysis information of the first network comprises analysis information of a first network slice in the first network;
the analysis information of the second network comprises analysis information of a second network slice in the second network;
wherein there is a mapping relationship between the first network slice and the second network slice.

30. The network function according to claim 28 or 29, wherein obtaining the analysis information of the target network comprises:
obtaining, by the second network function, the analysis information of the target network, or obtaining, by the third network function, the analysis information of the target network from the second network function;
wherein the second network function is a first network data analysis function, a first network data collection function, or a first network data storage function;
wherein the first network function belongs to the first network, the second network function belongs to the second network, and the analysis information of the target network comprises the analysis information of the second network; or, the first network function belongs to the second network, the second network function belongs to the first network, and the analysis information of the target network comprises the analysis information of the first network.

31. The network function according to claim 30, wherein the obtaining, by the third network function, the analysis information of the target network from the second network function, comprising:
receiving, by the third network function, a first request sent by the first network function, the first request carrying information of the first network and information of the second network;
sending, by the third network function based on the first request, a second request to the second network function, wherein the second request carries the information of the second network for requesting the analysis information of the second network;
receiving, by the third network function, a first response sent by the second network function based on the second request, the first response comprising the analysis information of the second network.

32. A network function, the network function being a first network function, comprising:
an obtaining unit, configured to obtain analysis information of the target network, the analysis information of the target network comprises at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
an execution unit, configured to perform management of a Protocol Data Unit (PDU) session in a roaming scenario based on the analysis information of the target network.

33. A network function, the network function being a second network function or a third network function, comprising:
an obtaining unit, configured to obtain analysis information of the target network, the analysis information of the target network comprises at least one of the followings: analysis information of a first network, or analysis information of a second network; wherein the first network is a Home Public Land Mobile Network (HPLMN), and the second network is a Visited Public Land Mobile Network (VPLMN); or, the first network is a VPLMN, and the second network is an HPLMN;
a sending unit, configured to send the analysis information of the target network to the first network function, the analysis information of the target network is used by the first network function to perform management of a Protocol Data Unit (PDU) session in a roaming scenario.

34. A processor-readable storage medium storing a computer program, wherein the computer program is used to cause a processor to execute the steps of the network analysis method according to any one of claims 1 to 13, or the steps of the network analysis method according to any one of claims 14 to 19.
